(19) Europäisches Patentamt
European Patent Office
Office européen des brevets

(11) **EP 4 517 671 A1**

(12) **EUROPEAN PATENT APPLICATION**
published in accordance with Art. 153(4) EPC

(43) Date of publication:
**05.03.2025   Bulletin 2025/10**

(21) Application number: **23795934.1**

(22) Date of filing: **10.03.2023**

(51) International Patent Classification (IPC):
**G06T 13/40** (2011.01)      **G06N 20/00** (2019.01)

(52) Cooperative Patent Classification (CPC):
**G06T 13/40; G06N 20/00**

(86) International application number:
**PCT/JP2023/009359**

(87) International publication number:
**WO 2023/210187 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.04.2022   JP 2022072088**

(71) Applicant: **Sony Group Corporation
Tokyo 108-0075 (JP)**

(72) Inventor: **MOCHIZUKI, Keita
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57)      [Problem] To better protect motion data.

[Solution] An information processing device includes: an obtainment unit that obtains a motion feature indicating a feature generated from motion data and delivered from a communication terminal; and a generation unit that generates an image corresponding to the motion data used to generate the motion feature obtained by the obtainment unit.

Fig. 2

EP 4 517 671 A1

**Description**

[Technical Field]

The present disclosure relates to an information processing device, an information processing method, and a program.

[Background Art]

Animation production and delivery which uses motion capture to obtain motion information indicating motion of a user has grown prevalent in recent years. For example, the obtained motion information is used to generate motion data that mimics the motion of the user, and an avatar image based on the motion data is then delivered. Against this background, the amount of motion data is increasing year by year, and technologies that reuse motion data generated thus far are being developed.

For example, PTL 1 below discloses a technique in which when a plurality of avatars approach each other, a server sends motion data used for rendering, such as a high-five exchanged between avatars, or already-rendered avatar data, to a client terminal.

[Citation List]

[Patent Literature]

[PTL 1]
JP 2020-91504A

[Summary]

[Technical Problem]

However, in the aforementioned PTL 1, for example, motion data transmitted by the client terminal may be extracted, which can make it difficult to protect the motion data.

Accordingly, the present disclosure proposes a new and improved information processing device, information processing method, and program capable of better protecting motion data.

[Solution to Problem]

According to the present disclosure, an information processing device is provided, including: an obtainment unit that obtains a motion feature indicating a feature generated from motion data and delivered from a communication terminal; and a generation unit that generates an image corresponding to the motion data used to generate the motion feature obtained by the obtainment unit.

According to the present disclosure, an information processing method executed by a computer is provided, the method including: obtaining a motion feature indicating a feature generated from motion data and delivered from a communication terminal; and generating an image corresponding to the motion data used to generate the motion feature obtained.

According to the present disclosure, a program is provided, the program causing a computer to implement: an obtainment function for obtaining a motion feature indicating a feature generated from motion data and delivered from a communication terminal; and a generation function for generating an image corresponding to the motion data used to generate the motion feature obtained by the obtainment function.

[Brief Description of Drawings]

[Fig. 1]

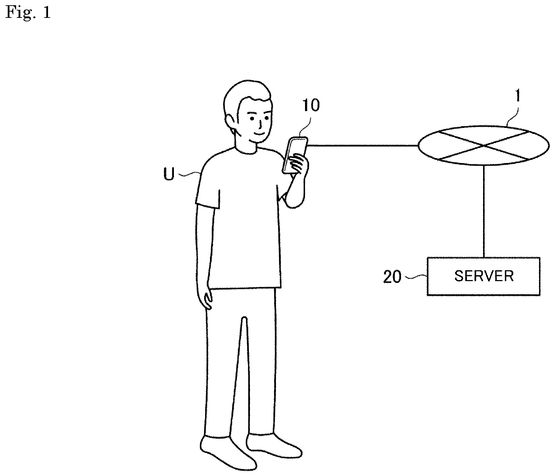

Fig. 1 is an explanatory diagram illustrating an information processing system according to one embodiment of the present disclosure.
[Fig. 2]

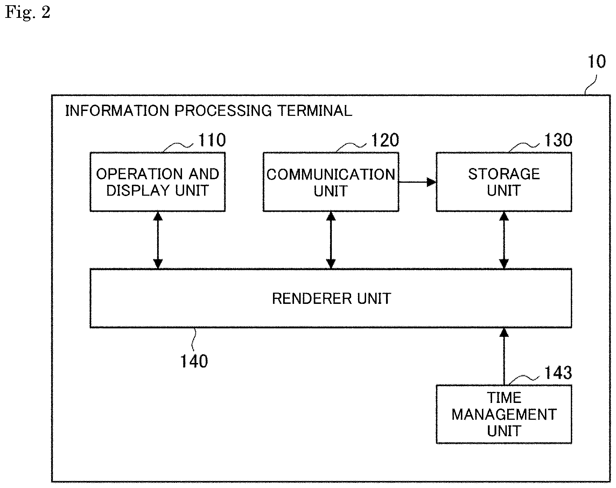

Fig. 2 is an explanatory diagram illustrating an example of the functional configuration of an information processing terminal 10 according to the present disclosure.

[Fig. 3]

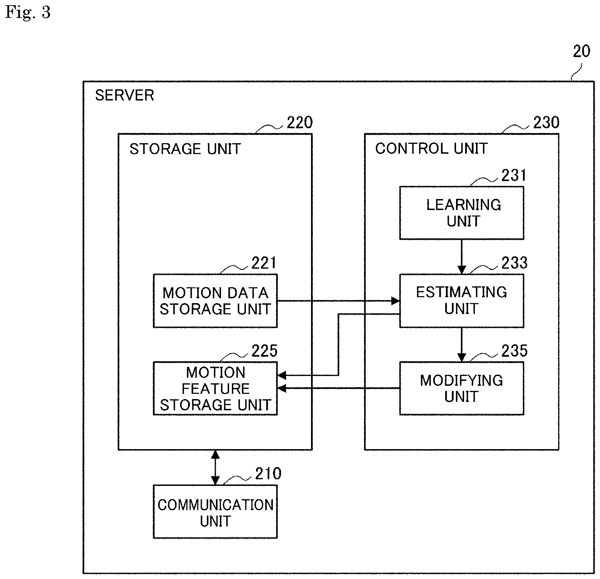

Fig. 3 is an explanatory diagram illustrating an example of the functional configuration of a server 20 according to the present disclosure.

[Fig. 4]

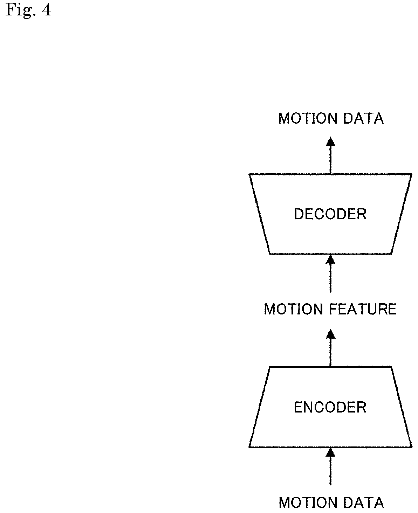

Fig. 4 is an explanatory diagram illustrating an example of the preparation of an estimation encoder.

[Fig. 5]

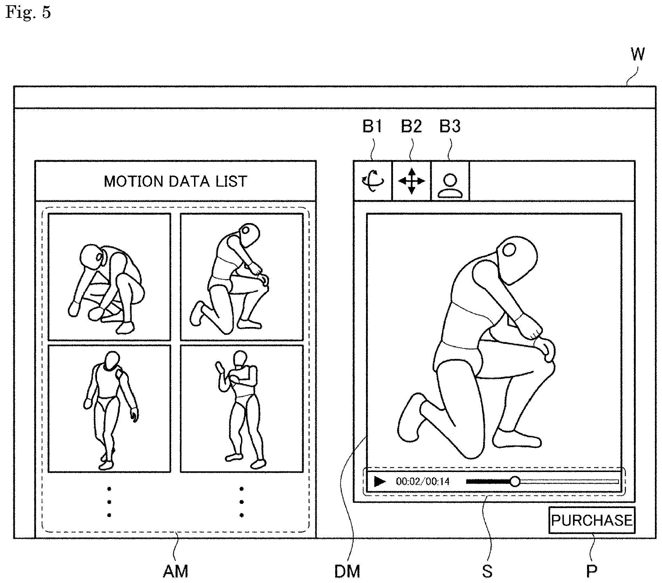

Fig. 5 is an explanatory diagram illustrating an example of a user interface according to the present disclosure.

[Fig. 6]

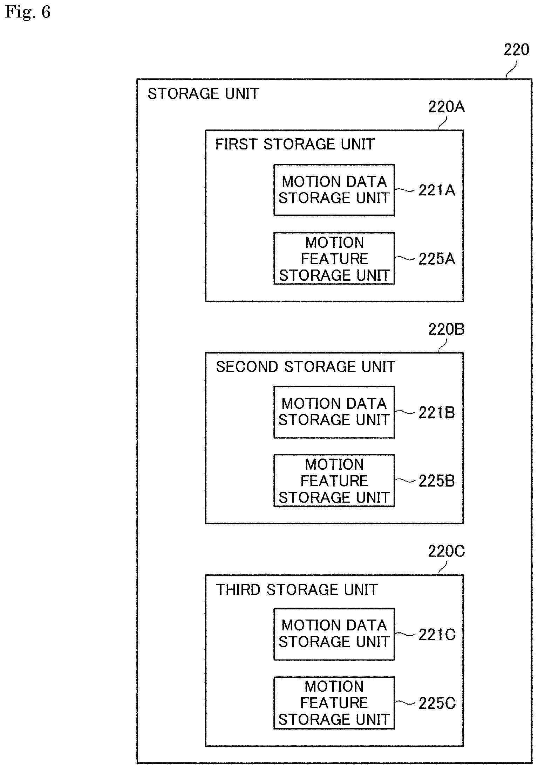

Fig. 6 is an explanatory diagram illustrating an example of the configuration of a storage unit 220 according to a variation.

[Fig. 7]

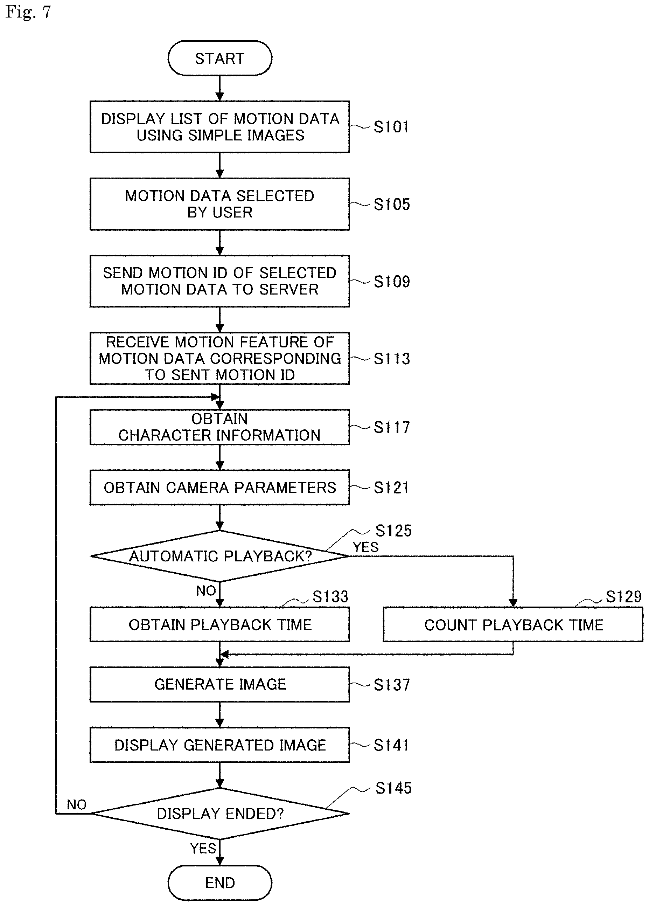

Fig. 7 is an explanatory diagram illustrating an example of operations and processing by the information processing terminal 10 according to the present disclosure.

[Fig. 8]

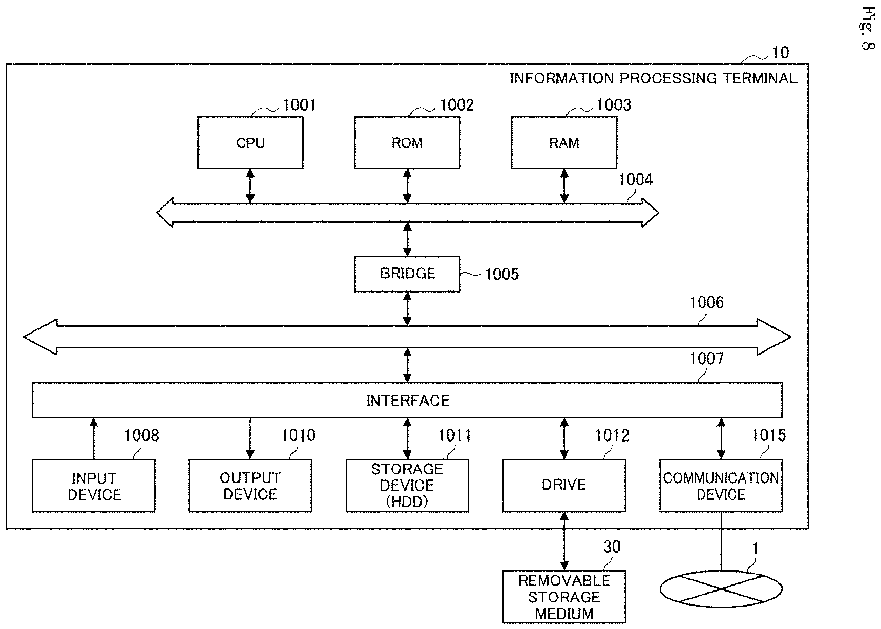

Fig. 8 is a block diagram illustrating the hardware configuration of the information processing terminal 10.

[Description of Embodiments]

Preferred embodiments of the present disclosure will be described in detail hereinafter with reference to the accompanying drawings. In the present specification and the drawings, components having substantially the same functional configuration will be denoted by the same reference signs, and repeated descriptions thereof will be omitted.

The embodiments will be described according to the order of items indicated below.

1. Overview of Information Processing System
2. Examples of Functional Configurations

   2-1. Example of Functional Configuration of Information Processing Terminal
   2-2. Example of Functional Configuration of Server

3. Details

   3-1. Background
   3-2. Preparation Phase
   3-3. Operation Phase

4. Variations
5. Example of Operations
6. Example Of Hardware Configuration
7. Supplemental Descriptions

<<1. Overview of Information Processing System>>

In motion data, skeleton data represented by, for example, a skeletal structure indicating the structure of the body, is used to visualize information on motion a moving body such as a human or an animal. Skeleton data includes information such as the position, attitude, and the like of a part. More specifically, skeleton data includes various information such as a global position of a root joint, a relative attitude of each joint, and the like. Note that a "part" in the skeletal structure corresponds to, for example, a terminal part, a joint part, and the like in a body. In addition, the skeleton data may include bones, which are line segments connecting parts. Although a "bone" in a skeletal structure can be equivalent to, for example, the bone of a human, the positions and numbers of bones do not necessarily have to match those of the actual human skeleton.

The position and attitude of each part in the skeleton data can be obtained through various motion capture techniques. For example, there is a camera-based technique in which markers are attached to each part of the body and the positions of the markers are obtained using an external camera or the like; and a sensor-based technique in which motion sensors are attached to parts of the body and position information of the motion sensors are obtained based on time-series data obtained by the motion sensors.

Furthermore, skeleton data can be applied in diverse settings. For example, time-series data of skeleton data is used to improve one's form in dance and sports, and for applications such as Virtual Reality (VR) or Augmented Reality (AR). The motion data, which is time-series data of the skeleton data, is also used to generate an avatar image that mimics the motion of the user, and the avatar image is then delivered.

Note that the motion data may further include various information such as skeleton information indicating the length of each bone and connection relationships with other bones, time-series data indicating information where both feet touch the ground, and the like.

An example of the configuration of an information processing system that better protects motion data will be described hereinafter as one embodiment of the present disclosure.

Fig. 1 is an explanatory diagram illustrating an information processing system according to one embodiment of the present disclosure. As illustrated in Fig. 1, the information processing system according to one embodiment of the present disclosure includes an information processing terminal 10 used by a user U, and a server 20.

The information processing terminal 10 and the server 20 are connected over a network 1. The network 1 is a wired or wireless transmission path for information sent from devices connected to the network 1. For example, the network 1 may include public line networks such as the Internet, telephone networks, satellite communication networks, or the like, various types of Local Area Networks (LANs) including Ethernet (registered trademark), Wide Area Networks (WANs), or the like. In addition, the network 1 may include a dedicated line network such as an Internet Protocol-Virtual Private Network (IP-VPN).

(Information Processing Terminal 10)

The information processing terminal 10 is an example of an information processing device. The information processing terminal 10 obtains motion features delivered from the server 20.

For example, the information processing terminal 10 may send a designated motion data identification (ID) indicating motion data designated by the user to the server 20. The information processing terminal 10 may then receive motion features of the designated motion data from the server 20.

The information processing terminal 10 also generates an image corresponding to the motion data used to generate the motion features.

Although Fig. 1 illustrates a smartphone as the information processing terminal 10, the information processing terminal 10 may be another device such as a laptop Personal Computer (PC), a desktop PC, or the like.

(Server 20)

The server 20 is an example of a communication device, and holds a plurality of items of motion data and motion features for each of the plurality of items of motion data. The server 20 also delivers the motion features of the motion data to the information processing terminal 10.

For example, the server 20 may receive the ID of designated motion data from the information processing terminal 10. The server 20 may then send the motion features of the designated motion data corresponding to the ID to the information processing terminal 10.

The foregoing has described an overview of the information processing system according to the present disclosure. An example of the functional configurations of the information processing terminal 10 and the server 20 according to the present disclosure will be described next.

<<2. Examples of Functional Configurations>>

<2-1. Example of Functional Configuration of Information Processing Terminal>

Fig. 2 is an explanatory diagram illustrating an example of the functional configuration of the information processing terminal 10 according to the present disclosure. As illustrated in Fig. 2, the information processing terminal 10 includes an operation and display unit 110, a communication unit 120, a storage unit 130, a renderer unit 140, and a time management unit 143.

(Operation and Display Unit 110)

The operation and display unit 110 functions as a display unit that displays search results sent from the server 20. For example, the operation and display unit 110 displays an image corresponding to motion data used to generate motion features, sent from the server 20.

The operation and display unit 110 also functions as an operation unit for the user to make operation inputs. For example, the user designates motion data using the operation and display unit 110.

The display unit function is realized, for example, by a cathode ray tube (CRT) display device, a liquid crystal display (LCD) device, or an organic light emitting diode (OLED) device.

The operation unit function is realized, for example, by a touch panel, a keyboard, or a mouse.

Note that in Fig. 1, the information processing terminal 10 is configured such that the functions of the display unit and the operation unit are integrated, but the configuration may be such that the functions of the display unit and the operation unit are separate.

(Communication Unit 120)

The communication unit 120 communicates various types of information with the server 20 over the network 1. For example, the communication unit 120 is an example of an obtainment unit, and obtains motion features delivered from the server 20.

For example, the communication unit 120 may send a designated motion data ID indicating motion data designated by the user to the server 20. The communication unit 120 may then receive motion features of the designated motion data, sent from the server 20 in response to the ID that was sent.

(Storage Unit 130)

The storage unit 130 holds software and various types of data. For example, the storage unit 130 holds downloaded motion data.

(Renderer Unit 140)

The renderer unit 140 is an example of a generation unit, and generates an image corresponding to motion data used to generate motion features, received from the server 20.

For example, the renderer unit 140 may generate an image corresponding to the motion data based on relationships between motion features and images learned in advance. Specific examples of processing pertaining to learning the relationships between motion features and images will be described later.

(Time Management Unit 143)

The time management unit 143 manages the times of motion data corresponding to the image generated by the renderer unit 140.

The foregoing has described an example of the functional configuration of the information processing terminal 10. Note that the functional configuration of the information processing terminal 10 is not limited to this example. For example, the information processing terminal 10 may further have a configuration for performing de-noising processing, which cancels modification of the motion features applied through modification processing performed by a modifying unit 235 (described later). An example of the functional configuration of the server 20 will be described next with reference to Fig. 3.

<2-2. Example of Functional Configuration of Server>

Fig. 3 is an explanatory diagram illustrating an example of the functional configuration of the server 20 according to the present disclosure. As illustrated in Fig. 3, the server 20 includes a communication unit 210, the storage unit 220, and a control unit 230.

(Communication Unit 210)

The communication unit 210 communicates various types of information with the information processing terminal 10 over the network 1. For example, the communication unit 210 may receive a designated motion data ID indicating motion data designated by the user from the information processing terminal 10.

The communication unit 210 also sends the motion features of the motion data corresponding to the ID received from the information processing terminal 10 to the information processing terminal 10.

(Storage Unit 220)

The storage unit 220 holds software and various types of data. As illustrated in Fig. 3, the storage unit 220 includes a motion data storage unit 221 and a motion feature storage unit 225.

The motion data storage unit 221 holds a plurality of pieces of motion data. For example, the motion data storage unit 221 may hold motion data and motion data IDs in association with each other.

Note that the motion data held by the motion data storage unit 221 may be data obtained through motion capture, or may be data obtained by modifying data obtained through motion capture.

In addition, the motion data held by the motion data storage unit 221 may be data created manually by a human, or may be data generated through machine learning techniques such as Deep Learning.

The motion feature storage unit 225 holds the motion features of each of the plurality of pieces of motion data held in the motion data storage unit 221. For example, the motion feature storage unit 225 may hold motion features and the IDs of motion data for which motion features have been generated in association with each other.

(Control Unit 230)

The control unit 230 controls the overall operations of the server 20. As illustrated in Fig. 3, the control unit 230 includes a learning unit 231, an estimating unit 233, and the modifying unit 235.

The learning unit 231 learns relationships between motion data and motion features. For example, the learning unit 231 may use an encoder/decoder model according to Deep Learning to learn the relationships between motion data and motion features.

The learning unit 231 may then generate an estimation encoder by learning the relationships between motion data and motion features. Specific examples of the processing for the learning by the learning unit 231 will be described later.

The estimating unit 233 estimates motion features from motion data. For example, the function of the estimating unit 233 is provided by the estimation encoder generated by the learning unit 231.

The modifying unit 235 performs modification processing that adds noise information to the motion features estimated by the estimating unit 233. The noise information includes, for example, information in which predetermined modification processing has been applied to the image generated by the renderer unit 140.

The predetermined modification processing may include, for example, processing for adding noise or a watermark to the image. The predetermined modification processing may also include, for example, processing for lowering the resolution, or any desired processing that makes it difficult the see the image. This can reduce the risk that the motion features will be used improperly.

In addition, when sending the motion features to the information processing terminal 10 of a trusted user, the modifying unit 235 may perform de-noising processing for removing the noise information added by the modification processing that has been performed.

The foregoing has described an example of the functional configuration of the information processing system according to the present disclosure. Details of the information processing system according to the present disclosure will be given in order next.

<<3. Details>>

<3-1. Background>

Selling motion data to a user is conceivable as an example of a method for reusing motion data. In this case, it is desirable for the user to consider the purchase after confirming whether motion data that provides the desired motion is for sale while confirming the image generated from the motion data.

In one example, it is conceivable for the server to send the image generated from the motion data to an information processing terminal used by the user, and the information processing terminal may then display the received image.

However, in this example, the user can confirm the image generated from the motion data, but it is difficult, for example, for the user to confirm the image from the viewpoint they wish to see or confirm the application of the motion data to a character, which makes it difficult for the user to grasp the details of the motion data.

In another example, it is conceivable for the server to send the motion data to an information processing terminal used by the user, and the information processing terminal may then display an image rendered from the received motion data.

It is also conceivable that encryption processing is being applied to the motion data exchanged between the server and the information processing terminal. In this case, the information processing terminal uses a decoder to decrypt the encrypted motion data into the motion data, and then displays the image rendered from the motion data.

However, in this other example, the image is generated using a public renderer, which can pose a risk of the motion data being extracted by, for example, using the debugging function of a browser.

Accordingly, the server 20 according to the present disclosure sends the motion features, which indicate the features generated from the motion data, to the information processing terminal 10. The information processing terminal 10 then generates and displays an image corresponding to the motion data used to generate the received motion features.

Here, when generating motion features from motion data, it may be possible for the user to better protect the motion data by using a private estimation encoder.

It is also possible for the renderer unit 140 to use the obtained motion feature along with camera parameters, character information, and the like (described later) to generate an image corresponding to the motion data, making it possible, for example, to display an image to which is applied a viewpoint, a character, or the like that the user wishes to see, and enabling the user to grasp the details of the motion data.

In this manner, the information processing system according to the present disclosure has a preparation phase including two types of preparation: one, preparing the estimation encoder for generating motion features from motion data; and two, preparing for rendering in which the renderer unit 140 generates an image from the motion features. Details of the preparation phase will be given in order hereinafter.

<3-2. Preparation Phase>

(Preparing Estimation Encoder)

Fig. 4 is an explanatory diagram illustrating an example of the preparation of the estimation encoder. For example, the learning unit 231 may use an encoder/decoder model such as that illustrated in Fig. 4 to learn the relationships between motion data and motion features.

Note that the motion data input to the encoder may be a single frame, or may be a plurality of frames.

First, the learning unit 231 prepares a motion data set constituted by $motion^i[0:T_i]$ (where i = 0 to N). Here, i represents a sequence of motion data used for the learning, and i = 0 to N. N represents the sequence number, and $T_i$ represents the number of frames in the sequence i.

The learning unit 231 then uses the following formula (Math. 1) to encode each item of motion data constituting the motion data set, and estimate motion features.

[Math. 1]

$$feature^i[0:T_i] = Enc(motion^i[0:T_i])$$

(Math. 1)

Next, the learning unit 231 uses the following formula (Math. 2) to decode the estimated motion features and estimate the motion data.

[Math. 2]

$$motion^i\_[0:T_i] = Dec(feature^i[0:T_i])$$

(Math. 2)

The motion data estimated through the decoding may be referred to as "estimated motion data" to distinguish that data from the motion data included in the motion data set prepared in advance.

The learning unit 231 then uses the following formula (Math. 3) to perform learning so as to minimize a loss function Loss between each motion data set constituting the motion data set and the estimated motion data estimated from each of those items of motion data.

[Math. 3]

$$Loss = \sum_{i=0}^{N}(motion^i[0:T_i] - motion^i\_[0:T_i])^2$$

(Math. 3)

The learning unit 231 then outputs the encoder, after the learning to minimize the loss function Loss, as an estimation encoder to the estimating unit 233.

(Estimation of Motion Features)

The estimating unit 233 then uses the estimation encoder to estimate the motion features from the motion data held in the motion data storage unit 221.

Note that the motion data input to the estimation encoder may or may not include the motion data used in the learning for the estimation encoder.

In addition, if the estimation encoder cannot handle variable-length inputs, the estimating unit 233 may use the following formula (Math. 4) to estimate motion features of any desired length, for example.

[Math. 4]

$$feature^i[t] = Enc\left(motion^i\left[t - \frac{T}{2} : t + \frac{T}{2}\right]\right)[t]$$

(Math. 4)

Here, T represents the input length of the estimation encoder.

The estimating unit 233 builds a database of motion features by storing the motion features of each item of motion data estimated through the processing described above in the motion feature storage unit 225.

Through this, if motion data has been designated by the user, the communication unit 210 included in the server 20 can send the motion features of the designated motion data designated by the user to the information processing terminal 10.

Having received the motion features, the information processing terminal 10 renders the motion features through the renderer unit 140 and generates an image corresponding to the motion data from which the motion features were generated.

A specific example of the learning for generating an image from the motion features will be described next. Note that the preparation for the learning by the renderer unit 140 may be performed in the server 20, or may be performed separately in another device.

(Rendering Preparation)

The renderer unit 140 renders the image at time t from, for example, motion features, camera parameters, and character information.

The camera parameters are, for example, parameters pertaining to viewpoint information indicating a viewpoint from which the image is viewed. More specifically, the camera parameters include information pertaining to the relative camera position and attitude as viewed from a character coordinate system.

The character information is, for example, information about a character acting out the motion data. For example, the character information may be data constituted by at least one of a 3D mesh, skeleton information, textures, a 2D image (or group of images) viewed from multiple viewpoints, or a point cloud.

Note that if the character to be rendered is set in advance, the character information may include only an ID of the character.

In addition, if only a single character is supported, the character information need not be included in the input used by the renderer unit 140 when rendering the image.

The learning of relationships between: motion features, camera parameters, and character information; and images, will be described in detail here. First, an image is obtained from any desired character information, any desired camera parameters, and motion data, using any desired renderer.

Next, the renderer unit 140 according to the present disclosure uses the following formula (Math. 5) to obtain an image from the character information and camera parameters input to the desired renderer, and the motion features generated by the motion data input to the desired renderer. The renderer unit 140 is, for example, a Deep Neural Network (DNN) renderer, and will be referred to as "Neural Renderer".

[Math. 5]

$$image\_^i[t] = NeuralRenderer(feature^i\left[t - \frac{T}{2} : t + \frac{T}{2}\right], camera, character)$$

(Math. 5)

Here, T represents the input length, and may be different from the input length of the estimation encoder.

The, learning may be performed to minimize the loss function Loss between an image $image^i[t]$ obtained by the desired renderer and the image $image\_^i[t]$ obtained by the renderer unit 140, using the following formula (Math. 6), for example.

[Math. 6]

$$Loss = \sum_{i=0}^{N} (image\_^i[t] - image^i[t])^2$$

(Math. 6)

The renderer unit 140 may then generate an image from the motion features, camera parameters, and character information using the Neural Renderer obtained through the learning.

Note that the image to be learned by the Neural Renderer may be an image to which predetermined modification processing, such as adding noise, a watermark, reducing the resolution, or the like has been applied. This can mitigate the risk of the rendered image being reused.

The foregoing has described the details of the preparation phase. The operation phase, which is the phase of actual use by the user, will be described in detail next. Although the present disclosure mainly describes an example of selling motion data to a user, the use cases of the information processing system according to the present disclosure are not limited to this example.

<3-3. Operation Phase>

Fig. 5 is an explanatory diagram illustrating an example of a user interface according to the present disclosure. For example, the operation and display unit 110 displays a motion data sales screen W such as that illustrated in Fig. 5.

The motion data sales screen W includes, for example, a list AM of motion data held by the server 20. For example, the user may confirm moving gif images, still images, and the like of each item of motion data in the motion data list AM.

Note that the motion data list AM may have some or all of the motion data held in the motion data storage unit 221 arranged in any desired order. For example, the motion data list AM may be arranged in order by the ID of the motion data, or may be motion data groups belonging to a given category or recommended motion data groups. The motion data list AM may also include results searched out through motion capture that captures the motion of the user.

For example, the user designates one item of the motion data included in the motion data list AM using the operation and display unit 110. The communication unit 120 then sends the ID of the motion data designated by the user to the server 20. The server 20 then sends the motion features corresponding to the received ID to the information processing terminal 10.

Then, based on the received motion features, the renderer unit 140 generates an image corresponding to the motion data from which the motion features were generated. The operation and display unit 110 may then display the generated image in a designated motion data display region DM.

For example, the camera parameters may be changed by a mouse operation (e.g., dragging and dropping or the like) performed in the designated motion data display region DM. Additionally, the camera parameters may be changed after selecting a rotate button B1 and a move button B2.

For example, the user may select the rotate button B1 and then change the attitude of the camera, using each of the x-axis, y-axis, and z-axis as rotation axes. The user may also select the move button B2 and change the position of the camera in each of the x-direction, y-direction, and z-direction.

Additionally, the user may select the rotate button B1 or the move button B2, and input each camera parameter as a numerical value.

The character information may be changed by selecting a character prepared in advance on the service provider side. For example, the user selects a change character button B3. In this case, the operation and display unit 110 may display candidates to which the character can be changed. The user then selects one character from the displayed character candidates. The character information may then be changed to various information pertaining to the character selected by the user.

Additionally, the character information may be changed by uploading a character prepared by the user. The character information to be uploaded may be, for example, a generic 3D model, or may be image data.

Additionally, although the renderer unit 140 generates an image corresponding to the motion data at the time of the input, the time may be counted automatically, or may be designated by the user through a seek bar S.

For example, the communication unit 120 included in the information processing terminal 10 obtains motion features from the server 20. The renderer unit 140 may then generate an image corresponding to the motion data at that time using the motion features, among the obtained motion features, from the time designated by the user through the seek bar S.

In addition, if the user designates a given time using the seek bar S, the communication unit 120 may obtain the motion features from that time from the server 20. In this case, the renderer unit 140 may generate an image corresponding to the motion data from that time.

As described above, the time, camera parameters, and the like are changed in real time through user operations or automatic counting, and thus the renderer unit 140 may perform the rendering processing involved in the generation of images sequentially.

In addition, if the time and camera parameters have not been changed, the operation and display unit 110 may skip the rendering process and display the image generated in the previous step.

Then, when there is motion data that the user wishes to purchase, the user may select a purchase button P and proceed to the processing for downloading the designated motion data. For example, if the purchase button G is selected by the user, the communication unit 120 included in the information processing terminal 10 sends the ID of the designated motion data to the server 20.

The server 20 may then send the motion data corresponding to the received ID to the information processing terminal 10, and the storage unit 130 may store the received motion data. This makes it possible to generate an image from the motion data using an existing renderer.

The foregoing has described the information processing system according to the present disclosure in detail. According to the information processing system described above, the risk of motion data being extracted can be reduced, and the motion data can be better protected. Note that the information processing system according to the present disclosure is not limited to the example described above. A variation on the information processing system according to the present disclosure will be described hereinafter with reference to Fig. 6.

<<4. Variations>>

Fig. 6 is an explanatory diagram illustrating an example of the configuration of the storage unit 220 according to the variation. For example, it is conceivable that there will be multiple users on both the service provider side and the service user side.

In this case, the storage unit 220 may hold motion data and motion features separately for each domain on the service provider side. For example, if there are three domains on the service provider side, the storage unit 220 may include a first storage unit 220A, a second storage unit 220B, and a third storage unit 220C, as illustrated in Fig. 6.

For example, limiting the domains that can be accessed by each user makes it possible to limit users with different levels of trust according to the domain, which can better protect the motion data.

In addition, a motion feature storage unit 225A provided in the first storage unit 220A, a motion feature storage unit 225B provided in the second storage unit 220B, and a motion feature storage unit 225C provided in the third storage unit 220C may each hold motion features estimated by the estimating unit 233 using different estimation encoders. In this case, the same number of decoders as there are estimation encoders are prepared.

Likewise, the renderer unit 140 included in the information processing terminal 10 may learn individually according to the corresponding estimation encoder. For example, the relationship between motion features and images may be learned separately by the renderer corresponding to the estimation encoder of a given domain, and the renderer corresponding to the estimation encoder of another domain.

A single renderer unit 140 may also learn so as to handle the motion features estimated by a plurality of estimation encoders.

The variation described above can, for example, make it difficult to build a general-purpose model through reverse engineering, which can better protect the motion data. More specifically, even if the estimation encoder or decoder of one domain has been reverse-engineered, restoring motion features of other domains can be made difficult.

The foregoing has described a variation on the information processing system according to the present disclosure. It should be noted that the first storage unit 220A, the second storage unit 220B, and the third storage unit 220C described above may be provided in a single server 20, or a plurality of servers 20 may include the storage units 220A to 220C, respectively. An example of operations by the information processing terminal 10 according to the present disclosure will be described next with reference to Fig. 7.

<<5. Example of Operations>>

Fig. 7 is an explanatory diagram illustrating an example of operations and processing by the information processing terminal 10 according to the present disclosure. First, the operation and display unit 110 displays a list of motion data using a simple image such as a moving gif image or a still image (S101).

Then, one item of motion data is selected through a user operation made in the operation and display unit 110 (S105).

The communication unit 120 then sends the ID of the selected motion data to the server 20 (S109).

The communication unit 120 then receives the motion feature of the motion data corresponding to the sent ID (S113).

Then, the operation and display unit 110 obtains character information through user operations (S117).

Next, the operation and display unit 110 obtains camera parameters through user operations (S121).

The renderer unit 140 then determines whether an image playback mode is automatic playback (S125). If the image playback mode is automatic playback (S125/Yes), the sequence moves to S129, whereas if the image playback mode is not automatic playback (S125/No), the sequence moves to S133.

If the image playback mode is automatic playback (S125/Yes), the time management unit 143 counts the playback time (S129).

If the image playback mode is not automatic playback (S125/No), the time management unit 143 obtains a playback time designated by the user (S133).

The renderer unit 140 then generates an image from the obtained playback time based on the motion features, the character information, and the camera parameters (S137).

Next, the operation and display unit 110 displays the generated image (S141).

Then, the operation and display unit 110 determines whether the display of the image has ended in response to a user operation (S145). If it is determined that the display of the image has not ended (S145/No), the sequence returns to S117. If it is determined that the display of the image has ended (S145/Yes), the information processing terminal 10 according to the present disclosure ends the operations and processing.

<<6. Example Of Hardware Configuration>>

The foregoing has described an embodiment of the present disclosure. Information processing, such as processing to generate an image corresponding to motion data used to generate motion features as described above, is realized through software and the hardware of the information processing terminal 10 described below operating in tandem. Note that the hardware configuration described below can also be applied to the server 20.

Fig. 8 is a block diagram illustrating the hardware configuration of the information processing terminal 10. The information processing terminal 10 includes a Central Processing Unit (CPU) 1001, a Read Only Memory (ROM) 1002, a Random Access Memory (RAM) 1003, and a host bus 1004. The information processing terminal 10 also includes a bridge 1005, an external bus 1006, an interface 1007, an input device 1008, an output device 1010, a storage device (HDD) 1011, a drive 1012, and a communication device 1015.

The CPU 1001 functions as a computational processing device and a control device, and controls the overall operations in the information processing terminal 10 according to various programs. The CPU 1001 may be a microprocessor. The ROM 1002 stores programs used by the CPU 1001, computation parameters, and the like. The RAM 1003 temporarily stores programs used for execution by the CPU 1001, parameters that change as appropriate in the execution, and the like. These are connected to each other by the host bus 1004, which is constituted by a CPU bus or the like. Functions such as the renderer unit 140 and the like described with reference to Fig. 2 can be realized by the CPU 1001, the ROM 1002, and the RAM 1003 operating in tandem with software.

The host bus 1004 is connected to the external bus 1006, such as a Peripheral Component Interconnect/Interface (PCI) bus, by the bridge 1005. It should be noted that the host bus 1004, the bridge 1005, and the external bus 1006 do not necessarily need to be configured separately, and the functions thereof may be implemented by one bus.

The input device 1008 is constituted by input means for a user to input information, such as a mouse, a keyboard, a touch panel, buttons, a microphone, switches, levers, or the like, and an input control circuit that generates an input signal based on the input by the user and outputs the input signal to the CPU 1001. The user of the information processing terminal 10 can input various types of data to the information processing terminal 10, instruct processing operations, and the like by operating the input device 1008.

The output device 1010 includes a display device such as a liquid crystal display device, an OLED device, a lamp, or the like, for example. The output device 1010 also includes an audio output device such as a speaker, headphones, or the like. The output device 1010 outputs played-back content, for example. Specifically, the display device uses text or images to display various types of information, such as played-back image data. On the other hand, the audio output device converts played-back audio data or the like into sound and outputs the sound.

The storage device 1011 is a device for storing data. The storage device 1011 may include a storage medium, a recording device that records data into the storage medium, a readout device that reads out data from the storage medium, a deletion device that deletes data recorded in the storage medium, and the like. The storage device 1011 is constituted by a Hard Disk Drive (HDD), for example. The storage device 1011 drives the hard disk and stores programs executed by the CPU 1001, various types of data, and the like.

The drive 1012 is a reader/writer for the storage medium, and is built into the information processing terminal 10, or is external thereto. The drive 1012 reads out information recorded in a removable storage medium 30, which is a magnetic disk, an optical disk, a magneto-optical disk, a semiconductor memory, or the like that is mounted, and outputs the information to the RAM 1003. The drive 1012 can also write information to the removable storage medium 30.

The communication device 1015 is a communication interface constituted by a communication device or the like for connecting to the network 1, for example. The communication device 1015 may be a wireless LAN-compatible communication device, an LTE (Long Term Evolution)-compatible communication device, or a wired communication device that communicates over wires.

<<7. Supplemental Descriptions>>

Although preferred embodiments of the present disclosure have been described in detail with reference to the accompanying drawings, the present disclosure is not limited to these examples. It will be clear that various changes and modifications can be arrived at by a person of ordinary skill in the technical field to which the present disclosure belongs without departing from the technical concepts disclosed in the scope of claims, and such changes and modifications are of course to be understood as falling within the technical spirit of the present disclosure.

For example, the server 20 may include some of the functional configuration of the information processing terminal 10. For example, the server 20 may further have a configuration having the functions of the renderer unit 140 described above. The server 20 may then generate an image from the motion features and send the generated image to the information processing terminal 10.

The server 20 need not include all the components illustrated in Fig. 3. For example, the server 20 need not include the modifying unit 235.

In addition, the steps in the processing of the information processing terminal 10 described in the present specification need not necessarily be performed chronologically in the order illustrated in the flowchart. For example, the steps in the processing by the information processing terminal 10 may be performed in an order different from the order illustrated in the flowchart.

In addition, it is possible to create a computer program for causing hardware such as the CPU, ROM, and RAM provided in the information processing terminal 10 to implement functions equivalent to the configuration of the information processing terminal 10 described above. A storage medium in which such a computer program is stored is also provided.

Further, the effects described in the present specification are merely explanatory or exemplary and are not intended as limiting. In other words, the techniques according to the present disclosure can provide other effects which will be clear to one skilled in the art from the present specification, along with or instead of the effects described above.

Note that configurations such as the following also fall within the technical scope of the present disclosure.

(1) An information processing device including:

an obtainment unit that obtains a motion feature indicating a feature generated from motion data and delivered from a communication terminal; and
a generation unit that generates an image corresponding to the motion data used to generate the motion feature obtained by the obtainment unit.

(2) The information processing device according to (1),
wherein the motion feature of the motion data is estimated using an estimation encoder obtained by learning a relationship between the motion data and the motion feature.
(3) The information processing device according to (1) or (2),
wherein the generation unit generates an image corresponding to the motion data based on a relationship between the motion feature and the image, the relationship having been learned in advance.
(4) The information processing device according to any one of (1) to (3),
wherein the generation unit generates an image corresponding to the motion data based on a relationship between: the motion feature and a camera parameter pertaining to viewpoint information indicating a viewpoint from which the image is viewed; and the image, the relationship having been learned in advance.
(5) The information processing device according to any one of (1) to (4),

wherein the motion data includes designated motion data indicating motion data designated by a user, and the obtainment unit obtains the motion feature of the designated motion data.

(6) The information processing device according to (5),

wherein the generation unit generates an image corresponding to the designated motion data based on a relationship between: the motion feature, a camera parameter pertaining to viewpoint information indicating a viewpoint from which the image is viewed, and
character information indicating a character to perform the motion data; and the image, the relationship having been learned in advance.

(7) The information processing device according to (6),
wherein the generation unit generates an image corresponding to the designated motion data at a time of input.
(8) The information processing device according to any one of (1) to (7),
wherein the motion feature includes noise information that adds predetermined modification processing to the image generated by the generation unit.
(9) The information processing device according to any one of (1) to (7),
wherein the generation unit generates an image in which predetermined modification processing is added to the motion data used to generate the motion feature obtained by the obtainment unit.
(10) The information processing device according to (5), wherein the motion feature of the designated motion data is estimated using an encoder corresponding to the designated motion data.
(11) The information processing device according to (10), wherein the motion feature of the designated motion data is estimated using a plurality of encoders corresponding to the designated motion data.
(12) The information processing device according to any one of (1) to (11), further including:
a display unit that displays the image generated by the generation unit.
(13) An information processing method executed by a computer, the method including:

obtaining a motion feature indicating a feature generated from motion data and delivered from a communication terminal; and
generating an image corresponding to the motion data used to generate the motion feature obtained.

(14) A program that causes a computer to implement:

an obtainment function for obtaining a motion feature indicating a feature generated from motion data and delivered from a communication terminal; and
a generation function for generating an image corresponding to the motion data used to generate the motion feature obtained by the obtainment function.

[Reference Signs List]

10 Information processing terminal
20 Server
110 Operation and display unit
120 Communication unit
130 Storage unit
140 Renderer unit
143 Time management unit
210 Communication unit
220 Storage unit
221 Motion data storage unit
225 Motion feature storage unit
230 Control unit
231 Learning unit
233 Estimating unit
235 Modifying unit

**Claims**

1. An information processing device comprising:

an obtainment unit that obtains a motion feature indicating a feature generated from motion data and delivered from a communication terminal; and
a generation unit that generates an image corresponding to the motion data used to generate the motion feature obtained by the obtainment unit.

2. The information processing device according to claim 1,
wherein the motion feature of the motion data is estimated using an estimation encoder obtained by learning a relationship between the motion data and the motion feature.

3. The information processing device according to claim 1,
wherein the generation unit generates an image corresponding to the motion data based on a relationship between the motion feature and the image, the relationship having been learned in advance.

4. The information processing device according to claim 1,
wherein the generation unit generates an image corresponding to the motion data based on a relationship between: the motion feature and a camera parameter pertaining to viewpoint information indicating a viewpoint from which the image is viewed; and the image, the relationship having been learned in advance.

5. The information processing device according to claim 1,

wherein the motion data includes designated motion data indicating motion data designated by a user, and the obtainment unit obtains the motion feature of the designated motion data.

6. The information processing device according to claim 5,

wherein the generation unit generates an image corresponding to the designated motion data based on a relationship between: the motion feature, a camera parameter pertaining to viewpoint information indicating a viewpoint from which the image is viewed, and
character information indicating a character to perform the motion data; and the image, the relationship having been learned in advance.

7. The information processing device according to claim 6,
wherein the generation unit generates an image corresponding to the designated motion data at a time of input.

8. The information processing device according to claim 7,
wherein the motion feature includes noise information that adds predetermined modification processing to the image generated by the generation unit.

9. The information processing device according to claim 7,
wherein the generation unit generates an image in which predetermined modification processing is added to the motion data used to generate the motion feature obtained by the obtainment unit.

10. The information processing device according to claim 5,
wherein the motion feature of the designated motion data is estimated using an encoder corresponding to the designated motion data.

11. The information processing device according to claim 10,
wherein the motion feature of the designated motion data is estimated using a plurality of encoders corresponding to the designated motion data.

12. The information processing device according to claim 11, further comprising:
a display unit that displays the image generated by the generation unit.

13. An information processing method executed by a computer, the method comprising:

obtaining a motion feature indicating a feature generated from motion data and delivered from a communication terminal; and
generating an image corresponding to the motion data used to generate the motion feature obtained.

14. A program that causes a computer to implement:

an obtainment function for obtaining a motion feature indicating a feature generated from motion data and delivered from a communication terminal; and
a generation function for generating an image corresponding to the motion data used to generate the motion feature obtained by the obtainment function.

Fig. 1

Fig. 2

INFORMATION PROCESSING TERMINAL ~ 10

```
~110              ~120              ~130
┌──────────────┐  ┌──────────────┐  ┌──────────────┐
│OPERATION AND │  │COMMUNICATION │  │   STORAGE    │
│ DISPLAY UNIT │  │     UNIT     │→ │    UNIT      │
└──────────────┘  └──────────────┘  └──────────────┘

┌────────────────────────────────────────────────┐
│                RENDERER UNIT                     │
└────────────────────────────────────────────────┘
         140
                                    ~143
                              ┌──────────────┐
                              │     TIME     │
                              │  MANAGEMENT  │
                              │     UNIT     │
                              └──────────────┘
```

Fig. 3

Fig. 4

MOTION DATA

DECODER

MOTION FEATURE

ENCODER

MOTION DATA

Fig. 5

Fig. 6

220

STORAGE UNIT

220A

FIRST STORAGE UNIT

MOTION DATA
STORAGE UNIT — 221A

MOTION
FEATURE
STORAGE UNIT — 225A

220B

SECOND STORAGE UNIT

MOTION DATA
STORAGE UNIT — 221B

MOTION
FEATURE
STORAGE UNIT — 225B

220C

THIRD STORAGE UNIT

MOTION DATA
STORAGE UNIT — 221C

MOTION
FEATURE
STORAGE UNIT — 225C

Fig. 7

```
              ┌─────────────┐
              │    START    │
              └──────┬──────┘
                     │
                     ▼
      ┌──────────────────────────────┐
      │ DISPLAY LIST OF MOTION DATA   │─ S101
      │    USING SIMPLE IMAGES        │
      └──────────────┬───────────────┘
                     │
                     ▼
      ┌──────────────────────────────┐
      │   MOTION DATA SELECTED        │─ S105
      │        BY USER                │
      └──────────────┬───────────────┘
                     │
                     ▼
      ┌──────────────────────────────┐
      │ SEND MOTION ID OF SELECTED    │─ S109
      │   MOTION DATA TO SERVER        │
      └──────────────┬───────────────┘
                     │
                     ▼
      ┌──────────────────────────────┐
      │  RECEIVE MOTION FEATURE OF     │
      │ MOTION DATA CORRESPONDING      │─ S113
      │    TO SENT MOTION ID           │
      └──────────────┬───────────────┘
                     │
                     ▼
      ┌──────────────────────────────┐
      │        OBTAIN                 │─ S117
      │  CHARACTER INFORMATION         │
      └──────────────┬───────────────┘
                     │
                     ▼
      ┌──────────────────────────────┐
      │   OBTAIN CAMERA PARAMETERS     │─ S121
      └──────────────┬───────────────┘
                     │
                     ▼
              ◇─────────────◇  S125
              │ AUTOMATIC   │── YES ──────────┐
              │ PLAYBACK?   │                 │
              ◇─────┬───────◇                 │
                    │ NO                       ▼
                    ▼               ┌──────────────────────┐
      ┌──────────────────────┐      │  COUNT PLAYBACK TIME  │─ S129
      │ OBTAIN PLAYBACK TIME  │─S133 └──────────┬───────────┘
      └──────────┬───────────┘                 │
                 │◄───────────────────────────┘
                 ▼
      ┌──────────────────────┐
      │   GENERATE IMAGE      │─ S137
      └──────────┬───────────┘
                 │
                 ▼
      ┌──────────────────────┐
      │ DISPLAY GENERATED     │─ S141
      │      IMAGE            │
      └──────────┬───────────┘
                 │
                 ▼
          ◇─────────────◇  S145
   NO ─── │ DISPLAY     │
          │ ENDED?      │
          ◇─────┬───────◇
                │ YES
                ▼
          ┌─────────────┐
          │     END     │
          └─────────────┘
```

Fig. 8

## INTERNATIONAL SEARCH REPORT

| International application No. |
|---|
| **PCT/JP2023/009359** |

**A. CLASSIFICATION OF SUBJECT MATTER**

*G06T 13/40*(2011.01)i; *G06N 20/00*(2019.01)i
FI:  G06T13/40; G06N20/00 160

According to International Patent Classification (IPC) or to both national classification and IPC

**B. FIELDS SEARCHED**

Minimum documentation searched (classification system followed by classification symbols)

G06T13/40; G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2021/0383585 A1 (ELECTRONIC ARTS INC.) 09 December 2021 (2021-12-09) paragraphs [0039], [0063]-[0082], fig. 1, 7-10 | 1-3, 5, 10-14 |
| A | paragraphs [0039], [0063]-[0082], fig. 1, 7-10 | 4, 6-9 |
| A | JP 2015-191538 A (KDDI CORP.) 02 November 2015 (2015-11-02) paragraph [0019] | 4, 6-9 |
| A | JP 2020-149492 A (OMRON CORP.) 17 September 2020 (2020-09-17) entire text, all drawings | 1-14 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/009359**

| Patent document cited in search report | | | Publication date (day/month/year) | Patent family member(s) | | | Publication date (day/month/year) |
|---|---|---|---|---|---|---|---|
| US | 2021/0383585 | A1 | 09 December 2021 | (Family: none) | | | |
| JP | 2015-191538 | A | 02 November 2015 | (Family: none) | | | |
| JP | 2020-149492 | A | 17 September 2020 | EP | 3940598 | A1 | |
| | | | | entire text, all drawings | | | |
| | | | | CN | 112543942 | A | |
| | | | | WO | 2020/184600 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020091504 A